# FASCICULE DE BREVET EUROPEEN

(11) **EP 3 064 253 B1**
(45) Date de publication et mention de la délivrance du brevet: **04.07.2018**
(21) Numéro de dépôt: 16157140.1
(22) Date de dépôt: 24.02.2016
(51) Int. Cl.: A62B 1/14, A63B 29/02

(54) **BLOQUEUR SUR CORDE ÉQUIPÉ D'UNE CAME À RESSORT PERFECTIONNÉ**
SEILKLEMME, DIE MIT EINER NOCKE MIT PERFEKTIONIERTER FEDER AUSGESTATTET IST
ROPE ASCENDER PROVIDED WITH A CAM HAVING AN IMPROVED SPRING

(30) Priorité: 05.03.2015 FR 1551856
(43) Date de publication de la demande: 07.09.2016
(73) Titulaire: Zedel, 38920 Crolles (FR)
(72) Inventeur: MOINE, Julien, 38660 La Terrasse (FR); MAURICE, Alain, 38660 Saint Hilaire du Touvet (FR); VUILLERMOZ, Benoît, 38400 Saint-Martin-d'Hères (FR)
(74) Mandataire: Talbot, Alexandre

(56) Documents cités:
- EP-A1- 2 191 870
- WO-A2-2012/164279
- US-A- 3 852 943
- US-A- 5 146 655

## Description

### Domaine technique de l'invention

L'invention concerne un bloqueur sur corde comprenant :
- un corps en forme de U muni d'une goulotte de passage de la corde,
- un levier d'actionnement ayant un orifice d'attache d'un moyen de sécurité, et une came de coincement de la corde, ledit levier étant logé dans la goulotte au moyen d'un axe démontable,
- et un ressort de rappel sollicitant la came vers la corde.

### Etat de la technique

Des bloqueurs connus du genre mentionné, comportent un étrier en U formant une goulotte, un levier à came de blocage, et un axe amovible permettant d'installer ou de retirer le bloqueur en tout point de la corde. Le levier et l'axe détaché restent reliés au corps du bloqueur par un lien souple pour les rendre imperdables après démontage de l'axe. Le retour de la came en direction de la corde s'effectue par des moyens de rappel élastiques, par exemple par flexion d'un câble, ou par l'intervention d'un ressort de torsion ou de traction. Les opérations de mise en place et de démontage de ces moyens élastiques de rappel ne sont faciles à mettre en oeuvre par l'utilisateur avec un bloqueur à axe démontable.

Dans un autre type de bloqueur à came cité dans le document EP191870, le pivot reste solidarisé à demeure à la came, et c'est l'ensemble came et pivot qui est extractible hors de la goulotte après déverrouillage d'un système de verrous qui libère les extrémites opposées de l'axe. Des ressorts de torsion sont montés coaxialement sur les extrémités du pivot de par et d'autre de la came pour assurer le rappel. Le remontage de ces ressorts n'est pas facile lors de l'installation de l'ensemble came et pivot dans la goulotte

### Objet de l'Invention

L'objet de l'invention consiste à réaliser un bloqueur à came équipé d'un ressort de rappel facilement démontable et remontable par l'utilisateur sans risque d'erreur ou d'endommagement.

Le bloqueur à came selon l'invention est caractérisé en ce que le ressort est intégré dans une cassette de maintien laquelle est agencée dans un logement du levier de la came, ladite cassette étant configurée pour placer le ressort dans un état de précontrainte, et étant dotée de moyens de clippage aptes à s'adapter dans le logement du levier.

Selon un mode de réalisation préférentiel, la cassette comporte un embout de réception du ressort, et des doigts élastiques entourant coaxialement l'embout pour le clippage dans le logement. Le ressort est formé par un ressort de torsion du type spirale, monté autour de l'embout de la cassette.

La cassette est configurée pour coopérer avec une butée du levier pour assurer son maintien dans une saignée du corps. Lors de l'insertion du levier dans la goulotte, la cassette s'emboite dans la saignée du corps en présentant une seule position possible de montage.

L'axe de pivotement du levier à came est démontable par tout moyen de fixation mécanique rapide.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue éclatée en perspective du bloqueur selon l'invention ;
- la figure 2 est une vue éclatée en perspective du sous-ensemble levier à came et cassette de maintien du ressort de rappel;
- la figure 3 représente une vue du sous-ensemble de la figure 2 avec la cassette prête à être insérée dans le logement du levier ;
- la figure 4 montre une vue du sous-ensemble de la figure 3 après insertion dans le logement ;
- la figure 5 représente une vue du sous-ensemble de la figure 4 lors de son introduction dans la goulotte du corps ;
- la figure 6 est une vue de face de la goulotte du corps, avant insertion de l'axe de pivotement du levier. ;
- la figure 7 illustre une vue en coupe transversale selon l'axe du bloqueur ;
- les figures 8 et 9 sont des vues en coupe verticale du bloqueur, avec maintien de la cassette, respectivement en position ouverte et bloquée de la came.

### Description d'un mode particulier de réalisation

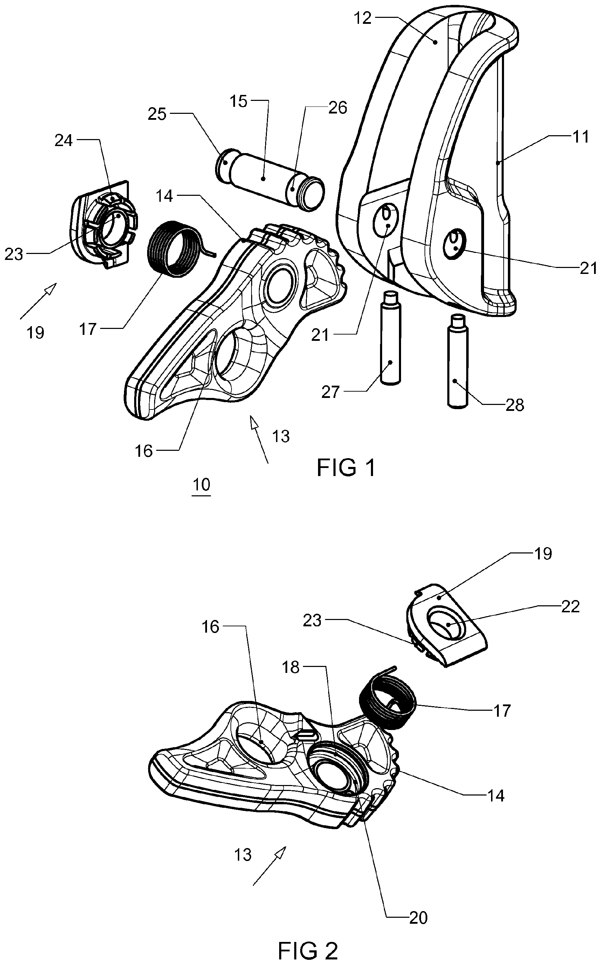

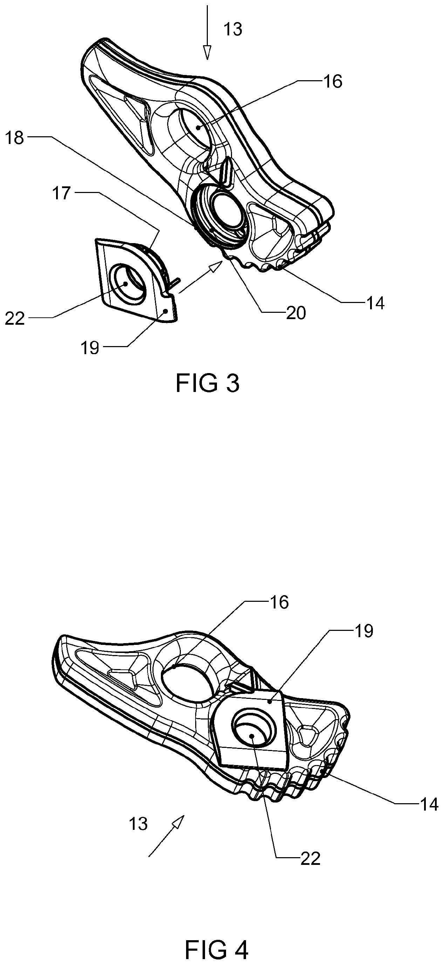

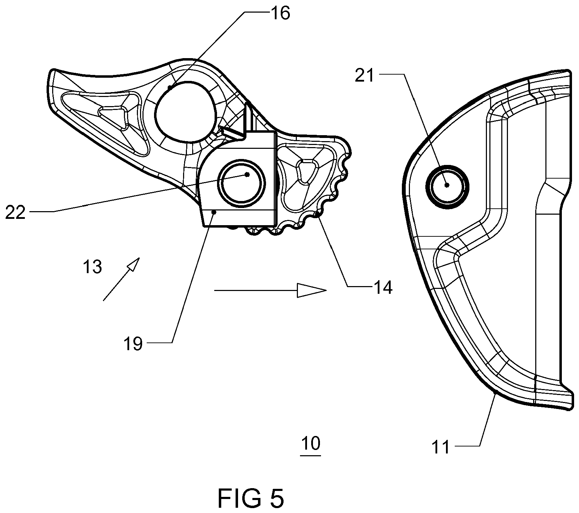

En référence aux figures 1 à 7, un bloqueur 10 est destiné à la progression sécurisée d'un grimpeur sur corde fixe, et à la réalisation de systèmes de mouflage ou de hissage.

Le bloqueur 10 comporte un corps 11 métallique en forme de U, doté d'une goulotte 12 centrale de passage de la corde, et un levier d'actionnement 13 à came 14 de blocage.

Le levier d'actionnement 13 peut basculer autour d'un axe 15 transversal entre une première position de coincement, et une deuxième position de déblocage de la corde. La came 14 s'étend à l'extrémité interne du levier d'actionnement 13 en regard du fond de la goulotte 12, de manière à bloquer la corde contre le fond de la goulotte 12 dans la première position. A l'extrémité opposée de la came 14, le levier d'actionnement 13 est muni d'un orifice 16 circulaire accessible depuis l'extérieur de la goulotte 12, pour l'attache d'un moyen de sécurité (non représenté) destiné à être raccordé au baudrier du grimpeur.

Le moyen de sécurité peut être un mousqueton, une cordelette ou une sangle. La surface de la came 14 venant en contact avec la corde, peut comporter une pluralité de nervures ou de picots pour renforcer l'effet de blocage. Après l'insertion de la corde dans la goulotte 12, le bloqueur 10 permet un libre déplacement du grimpeur vers le haut, et assure un effet de blocage vers le bas. Un ressort 17 de rappel formé à titre d'exemple par un ressort de torsion, est agencé coaxialement autour de l'axe 15 pour solliciter le levier d'actionnement 13 et la came 14 en légère pression sur la corde.

Les deux branches parallèles du corps 11 en U comportent des trous 21 alignés transversalement pour le passage de l'axe 15 du bloqueur. L'axe 15 est retenu par des moyens de fixation démontables, par exemple des vis et écrous, des goupilles, des billes téléscopiques, etc....

Selon l'invention, le ressort 17 est intégré dans un logement 18 circulaire ménagé dans le levier d'actionnement 13, en étant maintenu en place au moyen d'une cassette 19 de retenue. Le logement 18 est situé entre la came 14 d'extrémité et l'orifice d'attache 16, et présente un diamètre légèrement supérieur à celui du ressort 17 de torsion. Le fond du logement 18 est équipé d'un rebord 20 annulaire sur lequel le ressort 17 prend appui. Tout autre type de ressort peut bien entendu être utilisé en adaptant la configuration du logement 18.

La cassette 19 est réalisée de préférence en matière plastique moulée, et comporte un orifice 22 traversant autorisant le passage de l'axe 15. D'un côté, la cassette 19 présente une surface plane, et du côté opposé s'étend un embout 23 de logement du ressort 17. Des doigts 24 élastiques entourent coaxialement l'embout 23 pour assurer le clippage de la cassette 19 dans le logement 18. Des butées sont prévues des deux côtés de la cassette 19 pour assurer son blocage en rotation une fois insérée dans le logement 18 avec le ressort 17.

L'axe 15 présente une longueur correspondant à l'écartement des branches du corps 11 de manière à ne pas dépasser après introduction. Il est doté à ses extrémités opposées de deux gorges 25, 26 annulaires dans lesquelles s'engagent deux goupilles 27, 28 à fixation rapide.

Le montage du ressort 17 dans le bloqueur 10 s'effectue de la manière suivante :
On positionne d'abord le ressort 17 de torsion autour de l'embout 23 tubulaire de la cassette 19, on fait ensuite tourner la cassette 19 d'une fraction de tour pour mettre le ressort 17 dans un état de précontrainte, et on emboîte par clippage la cassette avec le ressort 17 dans le logement 18 du levier 13. Dans cet état, la cassette 19 protège le ressort 17, et l'ensemble est bloquée en rotation sur le levier 13 de la came 14.

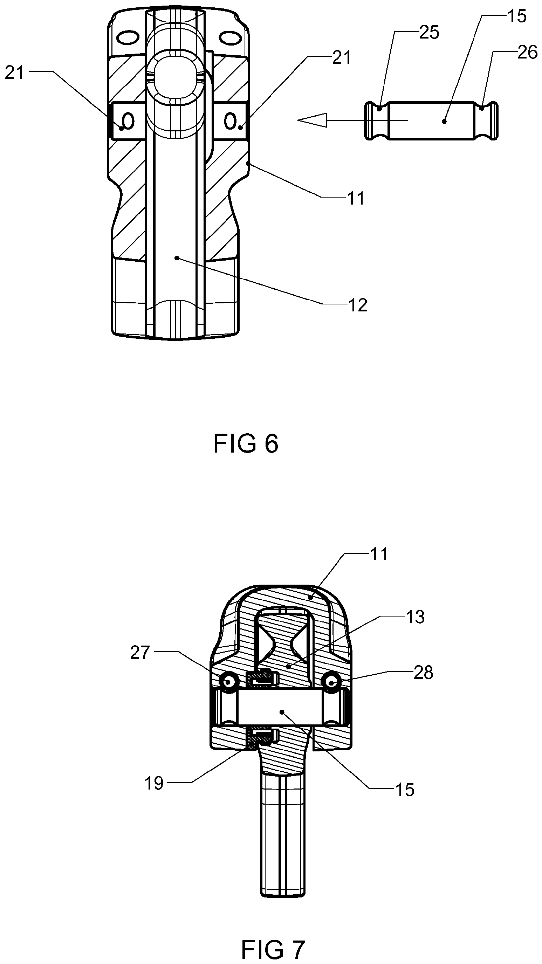

Le levier 13 de la came 14 équipé de la cassette 19 de maintien du ressort 17 constitue un sous-ensemble destiné à être inséré dans la goulotte 12 du corps 11 en faisant coïncider l'orifice 22 de la cassette 19 avec les trou 21 alignés du corps 11. La cassette 19 s'emboite dans une saignée 30 (figures 1 et 7) de l'une des branches du corps 11 en présentant une seule position possible de montage. En position insérée dans la saignée 30, la cassette 19 est est immobilisée en rotation.

L'axe 15 peut ensuite être introduit à travers les trous 21, et bloqué transversalement dans l'étrier 11 par la mise en place des deux goupilles 27, 28 à fixation rapide.

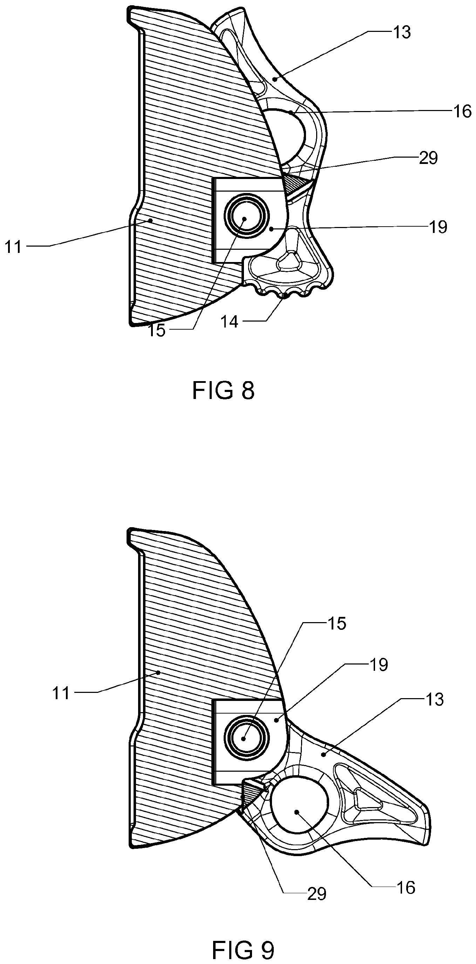

Sur les figures 8 et 9, une butée 29 du levier 13 coopère avec un bord arrondi de la cassette 19 pour assurer son maintien dans le logement 18 durant toute la course à pivotement du levier 13 à came 14 entre la position ouverte (figure 8) et la position bloquée (figure 9).

Après montage de l'axe 15, le bloqueur 10 est opérationnel et le ressort 17 en état de précontrante, sollicite la came 14 vers la corde par pivotement autour de l'axe 15.

Le démontage de l'axe 15 est effectué lors de la mise en place ou du retrait du bloqueur 10 de la corde, le levier 13 de la came 14 pouvant être relié au corps 11 au moyen d'une liaison imperdable, par exemple un câble ou tout autre lien souple.

## Revendications

1. Bloqueur sur corde comprenant :
- un corps (11) en forme de U muni d'une goulotte (12) de passage de la corde,
- un levier (13) d'actionnement ayant un orifice d'attache (16) d'un moyen de sécurité, et une came (14) de coincement de la corde, ledit levier étant logé dans la goulotte au moyen d'un axe (15) démontable,
- et un ressort (17) de rappel sollicitant la came (14) vers la corde,
bloqueur **caractérisé en ce que** le ressort (17) est intégré dans une cassette (19) de maintien laquelle est agencée dans un logement (18) du levier (13) de la came (14), ladite cassette étant configurée pour placer le ressort (17) dans un état de précontrainte, et étant dotée de moyens de clippage aptes à s'adapter dans le logement (18) du levier (13).

2. Bloqueur selon la revendication 1, **caractérisé en ce que** la cassette (19) comporte un orifice (22) pour le passage de l'axe (15).

3. Bloqueur selon la revendication 1 ou 2, **caractérisé en ce que** la cassette (19) comporte un embout (23) de réception du ressort (17), et des doigts (24) élastiques entourant coaxialement l'embout (23) pour le clippage dans le logement (18).

4. Bloqueur selon la revendication 3, **caractérisé en ce que** le ressort (17) est formé par un ressort de torsion du type spirale, monté autour de l'embout (23) de la cassette (19).

5. Bloqueur selon l'une des revendications précédentes, **caractérisé en ce que** la cassette (19) est configurée pour coopérer avec une butée (29) du levier (13) pour assurer son maintien dans une saignée (30) du corps (11).

6. Bloqueur selon l'une des revendications précédentes, **caractérisé en ce que** la cassette (19) est réalisée en matière plastique moulée.

7. Bloqueur selon l'une des revendications précédentes, **caractérisé en ce que** l'axe (15) de pivotement du levier (13) à came (14), est démontable par des moyens mécaniques à fixation rapide.

8. Bloqueur selon la revendication 5, **caractérisé en ce que** lors de l'insertion du levier (13) dans la goulotte (12), la cassette (19) s'emboite dans la saignée (30) du corps (11) en présentant une seule position possible de montage.

## Patentansprüche

1. Seilklemme für ein Seil, die umfasst:
- einen U-förmigen Körper (11), der mit einer Hohlkehle (12) zum Durchführen des Seils versehen ist,
- einen Betätigungshebel (13) mit einer Einhängeöffnung (16) für ein Sicherungsmittel, und einen Nocken (14) zum Festklemmen des Seils, welcher Hebel mittels eines wegnehmbaren Bolzens (15) in der Hohlkehle untergebracht ist,
- und eine Rückholfeder (17), die den Nocken (14) zum Seil zieht, Seilklemme, die **dadurch gekennzeichnet ist, dass** die Feder (17) in eine Haltekassette (19) integriert ist, in der sie in einer Aufnahme (18) des Hebels (13) des Nockens (14) angeordnet ist, welche Kassette so vorgesehen ist, dass sie die Feder (17) in einen vorgespannten Zustand bringt, und mit Klemmmitteln versehen ist, die geeignet sind, sich in die Aufnahme (18) des Hebels einzupassen (13).

2. Seilklemme nach Anspruch 1, **dadurch gekennzeichnet, dass** die Kassette (19) eine Öffnung (22) zum Durchführen des Bolzens (15) umfasst.

3. Seilklemme nach Anspruch 1 oder 2, **dadurch gekennzeichnet, dass** die Kassette (19) ein Ende (23) zur Aufnahme der Feder (17) umfasst, wobei elastische Finger (24) das Ende (23) zum Einklemmen in die Aufnahme (18) koaxial umgeben.

4. Seilklemme nach Anspruch 3, **dadurch gekennzeichnet, dass** die Feder (17) von einer Torsionsfeder der Art Spiralfeder gebildet wird, die um das Ende (23) der Kassette (19) herum montiert ist.

5. Seilklemme nach einem der vorstehenden Ansprüche, **dadurch gekennzeichnet, dass** die Kassette (19) so vorgesehen ist, dass sie mit einem Anschlag (29) des Hebels (13) zusammenwirkt, um ihren Halt in einer Aussparung (30) des Körpers (11) sicherzustellen.

6. Seilklemme nach einem der vorstehenden Ansprüche, **dadurch gekennzeichnet, dass** die Kassette (19) aus Formpresskunststoff besteht.

7. Seilklemme nach einem der vorstehenden Ansprüche, **dadurch gekennzeichnet, dass** die Schwenkachse (15) des Hebels (13) mit Nocken (14) mit mechanischen Mitteln mit Schnellbefestigung demontierbar ist.

8. Seilklemme nach Anspruch 5, **dadurch gekennzeichnet, dass** sich die Kassette (19) beim Einführen des Hebels (13) in die Hohlkehle (12) in die Aussparung (30) des Körpers (11) einfügt und nur eine einzige mögliche Montageposition hat.

## Claims

1. Rope ascender comprising:
- a U-shaped body (11) provided with a gulley (12) for passage of the rope,
- an actuating lever (13) having an aperture (16) for attaching a safety means, and a cam (14) for jamming the rope, said lever being housed in the gulley by means of a removable pivot-pin (15),
- and a bias spring (17) biasing the cam (14) towards the rope,
ascender **characterized in that** the spring (17) is integrated in a securing cassette (19) which is arranged in a housing (18) of the lever (13) of the cam (14), said cassette being configured to place the spring (17) in a pre-stressed state, and being provided with clip-fastening means designed to be accommodated in the housing (18) of the lever (13).

2. Ascender according to claim 1, **characterized in that** the cassette (19) comprises an aperture (22) for passage of the pin (15).

3. Ascender according to claim 1 or 2, **characterized in that** the cassette (19) comprises an end-part (23) for receiving the spring (17), and elastic fingers (24) coaxially surrounding the end-part (23) for clip-fastening in the housing (18).

4. Ascender according to claim 3, **characterized in that** the spring (17) is formed by a torsion spring of spiral type, fitted around the end-part (23) of the cassette (19).

5. Ascender according to one of the foregoing claims, **characterized in that** the cassette (19) is configured to cooperate with a stop (29) of the lever (13) to perform securing of the latter in a groove (30) of the body (11).

6. Ascender according to one of the foregoing claims, **characterized in that** the cassette (19) is made from moulded plastic material.

7. Ascender according to one of the foregoing claims, **characterized in that** the pivot-pin (15) of the lever (13) with cam (14), is able to be disassembled by fast-on mechanical fixing means.

8. Ascender according to claim 5, **characterized in that**, when the lever (13) is inserted in the gulley (12), the cassette (19) engages in the groove (30) of the body (11) presenting a single possible assembly position.
